Europäisches Patentamt

European Patent Office

Office européen des brevets

(19)

(11) **EP 0 853 548 B1**

(12) **EUROPÄISCHE PATENTSCHRIFT**

(45) Veröffentlichungstag und Bekanntmachung des Hinweises auf die Patenterteilung:
**14.11.2001   Patentblatt 2001/46**

(51) Int Cl.[7]: **B29C 70/48**

(86) Internationale Anmeldenummer:
**PCT/EP96/04213**

(21) Anmeldenummer: 96933404.4

(22) Anmeldetag: **26.09.1996**

(87) Internationale Veröffentlichungsnummer:
**WO 97/12754 (10.04.1997 Gazette 1997/16)**

(54) **VORRICHTUNG UND VERFAHREN ZUR HERSTELLUNG VON GROSSFLÄCHIGEN BAUELEMENTEN NACH DEM RTM-VERFAHREN**

PROCESS AND DEVICE FOR PRODUCING LARGE-SURFACE STRUCTURAL ELEMENTS BY RESIN TRANSFER MOULDING

PROCEDE ET DISPOSITIF POUR PRODUIRE DES ELEMENTS CONSTITUTIFS A GRANDE SURFACE PAR MOULAGE PAR TRANSFERT DE RESINE

(84) Benannte Vertragsstaaten:
**AT BE CH DE ES FR GB IE IT LI NL SE**

(30) Priorität: **30.09.1995   DE 19536675**

(43) Veröffentlichungstag der Anmeldung:
**22.07.1998   Patentblatt 1998/30**

(73) Patentinhaber: **Deutsches Zentrum für Luft- und Raumfahrt e.V.**
**51147 Köln (DE)**

(72) Erfinder:
• **PABSCH, Arno**
**D-38110 Braunschweig (DE)**
• **SIGLE, Christof**
**D-38104 Braunschweig (DE)**

• **PIENING, Matthias**
**D-38110 Braunschweig (DE)**

(74) Vertreter: **Einsel, Martin, Dipl.-Phys. Patentanwalt,**
**Jasperallee 1A**
**38102 Braunschweig (DE)**

(56) Entgegenhaltungen:
**US-A- 2 913 036          US-A- 4 902 215**
**US-A- 4 942 013          US-A- 5 316 462**
**US-A- 5 439 635**

• **KUNSTSTOFF-RUNDSCHAU, September 1970, Seiten 475-479, XP002019779 WURTINGER: "Herstellung grossflächiger Glasfaser/Kunststoff-Teile im Injectionsverfahren" in der Anmeldung erwähnt**

EP 0 853 548 B1

**Beschreibung**

Die Erfindung bezieht sich auf eine Vorrichtung und ein Verfahren zur Herstellung von großflächigen Bauelementen aus Faserverbundwerkstoffen durch Injektion eines Harzgemisches in eine Form mit zusammenwirkenden Formelementen, zwischen die vorgeformte Faserlagen eingelegt sind, von denen das eine Formelement elastisch verformbar und das andere Formelement formbeständig ausgebildet ist und die beiden Formelemente an ihren Rändern vakuumdicht verbindbar sind, die Form mit Anschlüssen für Mittel zur Injektion des Harzgemisches und eine Drucksenke zum Absenken des Innendruckes des Formraumes unter den Atmosphärendruck versehen ist, bei dem auf die geschlossene Form in einem Druckbehälter allseitig ein über dem Atmosphärendruck liegender Außendruck aufgebracht wird, und in die Form das Harzgemisch mit einem Druck injiziert und bis zum Aushärten auf einem Druck gehalten wird, der um eine den Faservolumengehalt des Bauelementes bestimmende Differenz niedriger ist als der auf die Form wirkende Außendruck.

Derartige Verfahren sind eine besondere Variante der RTM (Resin Transfer Molding)-Verfahren.

In dem Aufsatz von Horst Wurtinger, "Tränkverfahren zum Herstellen großflächiger Glasfaser/ Kunststoff- Bauteile" in der Zeitschrift "Kunststoffe", Band 54 (1964) Heft 12 Seiten 797 bis 803 ist eine Form und ein Verfahren beschrieben gemäß dem einleitenden Teil des Anspruchs 1 bzw. 12, bei der die Anschlüsse für die Mittel zur Injektion des Harzgemisches und die Drucksenke in dem formstabilen Formteil angeordnet sind, und zwar an gegenüberliegenden Rändern des formstabilen Formteils, wobei auf der Innenseite dieses Formteils jeweils längliche Rillen angeordnet sind, in denen die Anschlüsse münden und die zur gleichmäßigen Querverteilung des Harzes zu beiden Seiten der Anschlüsse dienen. Das Harz soll somit durch die Rille nach beiden Seiten des Anschlusses verteilt die Faserlagen in einer zur Rille parallelen Lauffront durchströmen. Diese Rillen bilden sich auf der Oberfläche als linienförmige Vorsprünge ab, die abgearbeitet werden müssen.

In einem weiteren Aufsatz von Horst Wurtinger, "Herstellung großflächiger Glasfaser/Kunststoff - Teile im Injektionsverfahren" in der Zeitschrift "Kunststoff-Rundschau" Heft 9 (September 1970) S. 475 bis 479 ist für das Arbeiten mit Unterdruck in der Form ein Druck von 200 Torr (entsprechend 270 hPa) als untere Grenze angegeben mit der Begründung, daß es bei noch niedrigerem Druck zu einem Schäumen des Harzes kommt und zu einer starken Blasenbildung im Laminat.

Die US-PS 5,316,462 und die US-PS 5,439,635 zeigen eine andere herkömmliche Variante der RTM-Verfahren. Hier handelt es sich um mit Unterdruck gegen Atmosphärendruck arbeitende Vorrichtungen zur Herstellung faserverstärkter Verbundwerkstoffe, also ohne gesondert aufgebrachten Außendruck. Sie besitzen Zufuhrleitungselemente und eine stark strukturierte Innenseite der Vorrichtung, die dem zu bildenden Verbundwerkstoff benachbart ist. Diese sich kreuzende Kanäle bildende Struktur dient der besseren Verteilung des Harzes. Bei dieser herkömmlichen Variante des RTM-Verfahrens strömt das Harz senkrecht durch die Faserlagen.

Aufgabe der Erfindung ist es, die eingangs genannte Vorrichtung und das eingangs genannte Verfahren so weiter zu entwickeln, daß auch sehr große Bauelemente, beispielsweise Flügelschalen für Luftfahrzeuge mit großer Längserstreckung bis 25 m und mehr und großen Faservolumen herstellbar sind, auch solche, die auf ihrer Innenseite mit rippenartigen Vorsprüngen versehen sind, beispielsweise Stringern und Rippenträgern.

Diese Aufgabe wird gemäß der Erfindung bei einer Vorrichtung gemäß Anspruch 1 dadurch gelöst, daß für die Injektion des Harzgemisches und den Anschluß an die Drucksenke auf der dem formbeständigen Formteil gegenüberliegenden Oberfläche der Fasergelegegarnitur aufliegende Leitungselemente vorgesehen sind, die eine Längserstreckung in der Größenordnung der Länge oder der Breite der großflächigen Bauelemente und eine breitflächige Auflagefläche haben, oberhalb der Auflagefläche mit einem sich in Längsrichtung der Leitungselemente erstrekkenden Hohlraum versehen sind und in der Auflagefläche mit einem sich im wesentlichen über die gesamte Länge des Leitungselementes erstreckenden schmalen Schlitz versehen sind, der über seine Länge mit dem Hohlraum verbunden ist und dessen Breite schmaler ist als der Durchmesser des Hohlraumes.

Bei das Verfahren gemäß Anspruch 12 wird die Aufgabe dadurch gelöst, daß das Harzgemisch auf der dem formbeständigen Formteil gegenüberliegenden Oberfläche der Fasergelegegarnitur mittels eines Linienangusses aus einem längserstreckten Schlitz in einem Leitungselement mit einer Länge in der Größenordnung der Länge oder der Breite der großflächigen Bauelemente injiziert wird und durch einen längserstreckten Schlitz in einem anderen Leitungselement ein Anschluß an die Drucksenke gegeben ist, wobei die Schlitze eine Breite aufweisen, die schmaler ist als der Durchmesser eines Hohlraumes in dem Leitungselement.

Bevorzugte Ausgestaltungen sind Gegenstand der weiteren Ansprüche 2 - 11 und 13-17.

Ein besonderer Vorteil des erfindungsgemäßen Verfahrens und der erfindungsgemäßen Vorrichtung besteht darin, daß das die äußere Oberfläche bestimmende formstabile Formteil ohne Anschlüsse für die Mittel zur Injektion des Harzgemisches einerseits und die Drucksenke andererseits ausgebildet sein können, so daß sich keine Angüsse abbilden und daß auch das elastisch verformbare Formteil ohne solche Anschlüsse ausgebildet werden kann. Die Leitungselemente sind nach dem Aushärten des Harzgemisches über schmale Stege mit dem Bauteil verbunden, die beim Abnehmen der Leitungselemente in unmittelbarer Nähe der Oberfläche des Bauelementes abgerissen werden.

Die Erfindung ist in der Zeichnung beispielsweise veranschaulicht und im nachstehenden anhand der Zeichnung beschrieben. Es zeigen:

**Figur 1**  das Prinzip des Verfahrens anhand eines Querschnittes durch einen Autoklaven mit einer darin eingebrachten Form;

**Figur 2**  in einem Diagramm den Injektionsdruck, aufgetragen über der Injektionszeit:

**Figur 3**  einen Querschnitt durch ein Leitungselement;

**Figur 4**  einen Querschnitt durch eine einfache Schale;

**Figur 5**  eine Draufsicht auf einen Tragflügel;

**Figur 6**  einen Querschnitt längs der Linie VI-VI in Figur 5; und

**Figur 7**  isometrisch einen Kreuzungspunkt von Stringem und einem Rippenträger.

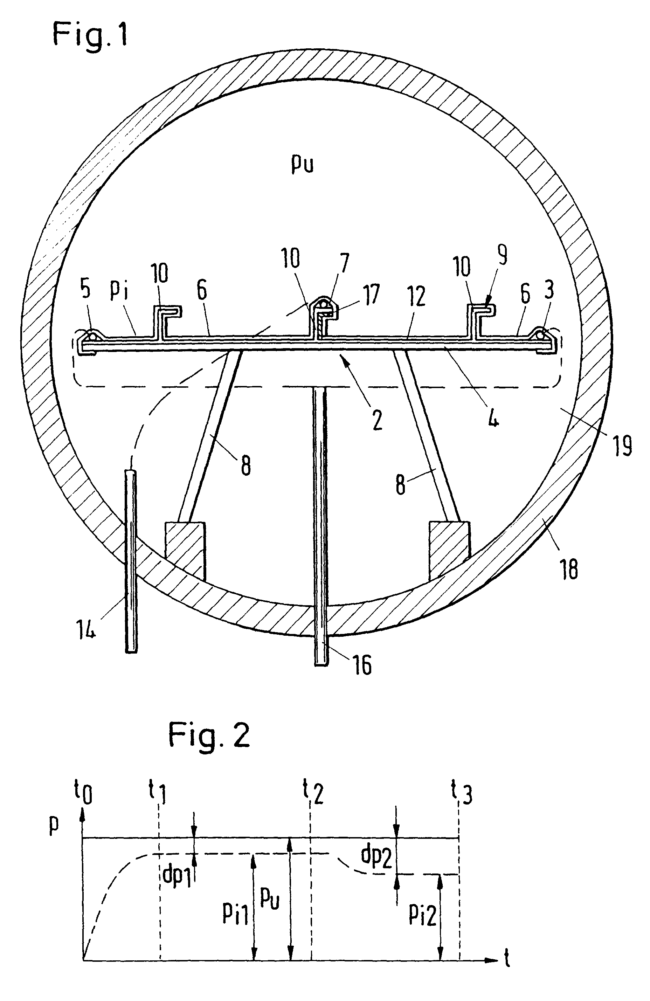

Die in **Figur 1** dargestellte Form 2 weist ein formbeständiges Formteil 4 und ein elastisch verformbar ausgebildetes Formteil 6 auf. Das Formteil 4 kann aus einem entsprechend der Kontur der äußeren Oberfläche eines zu fertigenden Bauelementes geformten Blech bestehen, das seine Formbeständigkeit durch Stützen oder Auflagen 8 erhält und weiter auch mit Rippen zur Erhöhung der Formstabilität versehen werden kann. Die der Formstabilität dienenden Mittel können angeklebt und durch Klebung untereinander verbunden sein, da sie nur geringe Kräfte aufzunehmen haben. Die Oberflächengüte dieses Formteils 4 bestimmt die Oberflächengüte des Bauelementes.

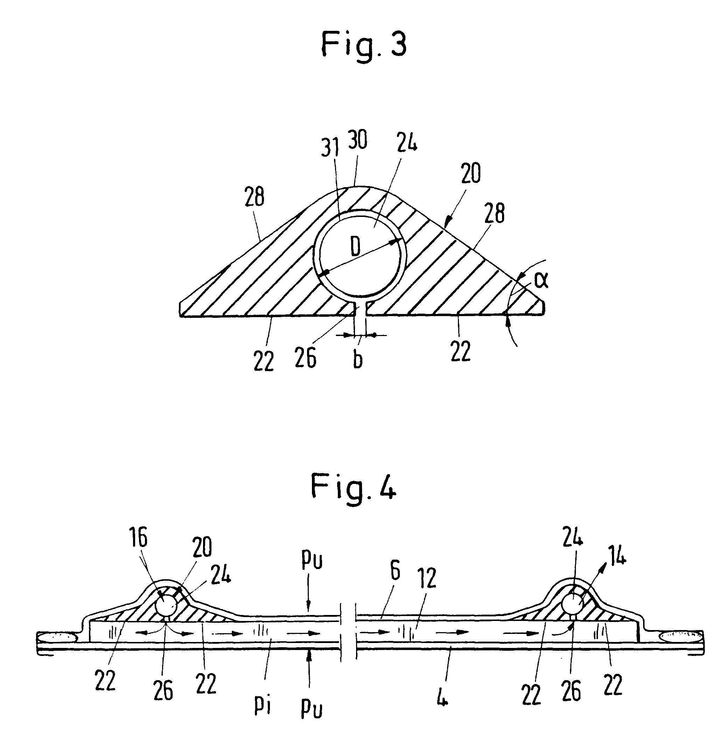

Das elastisch verformbare Formteil 6 und das formbeständige Formteil 4 sind an ihren Rändern miteinander vakuumdicht verbindbar. Dargestellt ist hier, daß das Formteil 6 das Formteil 4 über- und untergreift. Im Randbereich kann eine Dichtung durch einen Siegel- oder Klebestreifen erfolgen. Das Formteil 6 kann im einfachsten Fall eine entsprechend dem äußeren Umfang des elastischen Formteiles 6 zugeschnittene Folie sein, die auf der Oberfläche des Formteiles mit Siegel- oder Klebestreifen abgedichtet sein kann, wie beispielsweise in Figur 4 dargestellt.

Für großflächige Strukturen wie Schalen von Flugzeugbauelementen, aber auch für Kraftfahrzeugkarosserieelemente wird normalerweise auf einer Außenseite der Fläche eine hohe Oberflächengüte verlangt. Diese Fläche ist dabei normalerweise ohne starke Kontursprünge. Wenn auch die Rückseite ohne Vorsprünge ausgebildet ist, genügt als elastisch verformbares Formteil 6 eine glatte Folie entsprechender Festigkeit.

Das entsprechend den geforderten Festigkeitseigenschaften eines Bauelementes 9 ausgelegte Fasergelege kann als Fasergelegegarnitur 12 vorgefertigt werden. Es wird auf das formbeständige Formteil 4 aufgelegt und anschließend mit dem formbeständigen Formteil 6 abgedeckt, dessen freier Rand vakuumdicht mit dem formbeständigen Formteil 4 verbunden wird.

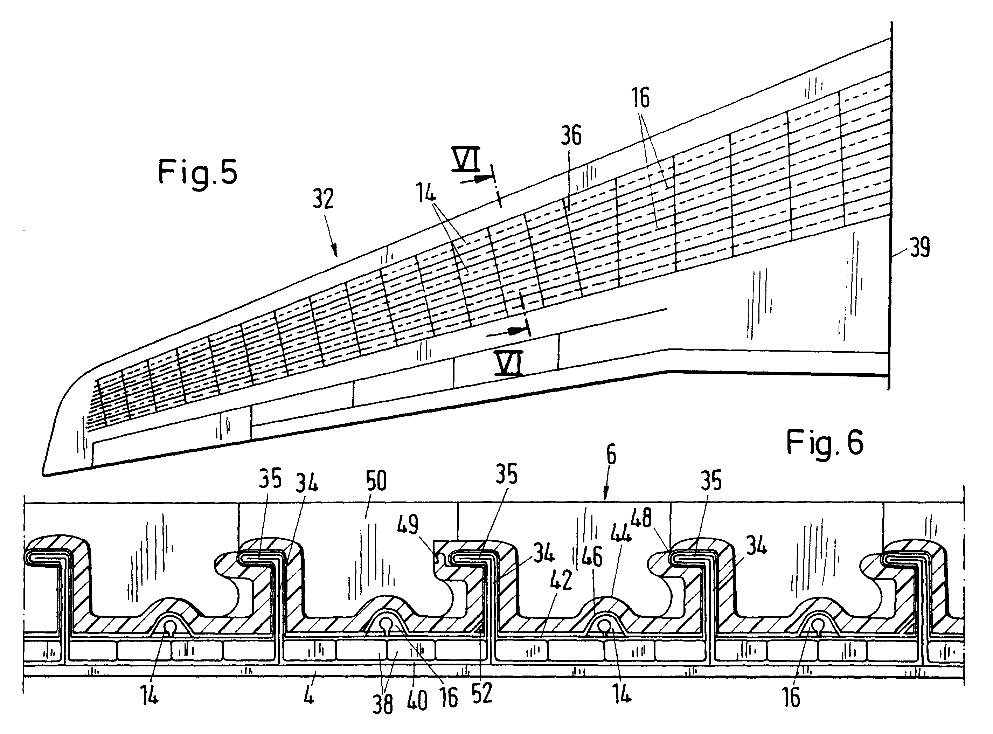

Bei dem Ausführungsbeispiel ist das Bauelement 9 mit in Abständen nebeneinander liegenden Versteifungsrippen 10 dargestellt. Im Bereich eines Vorsprunges, wie den dargestellten Rippen 10 oder auch von Kreuzungspunkten von Rippen kann das elastisch verformbare Formteil 6 mit einer entsprechend der Kontur einer solchen Rippe 10 oder Rippenkreuzung ausgebildeten Vertiefung vorgeformt sein. Solche vorgeformten Formelemente des Formteiles 6 können auch gesondert hergestellt werden und dann untereinander oder über Folienabschnitte oder sonstige Zwischenelemente verbunden, beispielsweise verklebt oder auch an-, auf- oder einvulkanisiert werden. Einzelheiten der Ausbildung solcher Formelemente werden unter Bezug auf die Figuren 5 bis 7 weiter unten beschrieben.

Bei Bauelementen 9 mit Vorsprüngen wie den dargestellten Rippen 10 kann es vorteilhaft sein, die Fasergelegegarnitur 12 auf dem verformbaren Formteil 6, in dem für die Vorsprünge vorgeformte Vertiefungen auszubilden sind, abzulegen. Es ist dann leichter, die für die Rippen 10 vorgesehenen Teile der Fasergelegegarnitur 12 in die entsprechenden Formvertiefungen einzuführen; auf die Fasergelegegarnitur 12 wird dann das Formteil 4 aufgelegt.

In der in Figur 1 dargestellten Form 2 sind drei längliche Leitungselemente 3, 5 und 7 angeordnet, von denen die Leitungselemente 3 und 5 an eine Vakuumleitung 14 und das Leitungselement 7 an eine Injektionsleitung 16 anschließbar sind. Die vorbereitete Form wird in einen Druckbehälter 18 eingebracht, der in seiner Wandung mit Durchlässen oder Anschlüssen für die Vakuumleitung 14 und die Injektionsleitung 16 für das Harz versehen ist. Über die Vakuumleitung 14 wird der Formraum zwischen den Formteilen 4 und 6 evakuiert. Eine Evakuierung, evtl. Teilevakuierung, der Form 2 vor dem Einbringen der geschlossenen Form in den Druckbehälter 18 sichert die feste Anlage der Fasergelegegarnitur 12 und des Formteiles 6 an dem Formteil 4.

Nach dem Einbringen der Form 2 in den Druckbehälter 18 wird dieser geschlossen, in der Form das Endvakuum hergestellt, das kleiner als 50 hPa (vorzugsweise zwischen 10 und 1 hPa) sein soll, also einem technischen Vakuum entspricht. Im Druckraum 19 wird ein Druck $p_u$ aufgebaut, der in der Grössenordnung von 0,3 bis 1,0 MPa, vorzugsweise etwa 0,6 MPa, liegen sollte; ein $p_u \cong 0,6$ MPa = 6.000 hPa = 6 bar entspricht damit dem zulässigen Innendruck von Großautoklaven, wie sie in der Luftfahrtindustrie eingesetzt werden. Nach Erreichen des Enddruckes, also dem vollständigen Evakuieren des Forminnenraums, wird über die Injektionsleitung 16 mit einem Druck $p_i$, der niedriger als der Außendruck $p_u$ im Druckbehälter ist, ein reaktives Harzgemisch eingespritzt, das die Form 2 vollständig füllt.

Durch das an der Form liegende Vakuum ist die Form vollständig entlüftet, so daß bei Injizieren des Harzes die Bildung von Luftnestern vermieden wird. Die Vakuumleitung 14 sollte dabei zweckmäßig so angebracht sein, daß sie von der Fließfront des Harzes zuletzt erreicht wird.

In dem Vakuum kann an der freien Oberfläche der Fließfront, an der allein das Vakuum auf das Harz-Härter-Gemisch einwirkt, Härter ausgasen. Jedoch wird dies durch die verfahrensbedingte scharfe Abgrenzung zwischen dem Vakuumbereich und dem Überdruck im Harzfließbereich weitgehend vermieden. Die geringfügigen anfallenden Mengen werden über die Vakuumleitung abgeführt und ausgespült.

Allgemein gilt:
Bei dem Verfahren gemäß der Erfindung ist der Injektionsdruck $p_1$ kleiner als der Außen- oder Umgebungsdruck $p_u$ zu halten. Es gilt also

$$p_u > p_1.$$

Der Faservolumengehalt ist eine Funktion des Druckunterschiedes $dp = p_u - p_i$. Die Beziehung zwischen dem Faservolumengehalt $V_F$ und dem Druckunterschied dp läßt sich einfach aus der Steifigkeit der Fasergelegegarnitur 12 ermitteln. Zu diesem Zweck wird die Fasergelegegarnitur 12 zwischen zwei parallele Druckplatten eingelegt. Werden die Druckplatten zusammengefahren und damit die Fasergelegegarnitur 12 komprimiert, läßt sich die Dicke der Schicht als Funktion der Druckkraft ermitteln.

Es gilt

$$dp = F/(A_d)$$

mit dp (Pa), Kraft F(N) und $A_d$ (m$^2$).

Aus dem Kompressionsmaß $d_d$, der Anzahl n der Gewebelagen, dem Flächengewicht $F_F$ des Fasermaterials und der Dichte p der Faser läßt sich dann der Faservolumengehalt $V_F$ des Bauelementes ermitteln entsprechend der Formel

$$V_F = F_F \cdot n / (\rho_F \cdot d_d)$$

mit $F_F$ (kg / m$^2$), $\rho_F$ (kg / m$^3$) und $d_d$ (m).

Hieraus geht hervor, daß'sich der Faservolumengehalt $V_F$ als Funktion der Druckdifferenz dp zwischen Innendruck $p_1$ und Außendruck $p_u$ ergibt.

Für die Herstellung eines Faserverbundbauelementes läßt sich damit für den jeweils gewünschten Faservolumengehalt der nötige Druckunterschied dp ermitteln, der beim Einsetzen der Verfestigung des Harzes herrschen muß.

Der benötigte Druckunterschied dp ist unabhängig vom Außendruck einzuhalten. Daraus ergibt sich, daß durch Erhöhen des Außendrucks der Injektionsdruck $p_1$ erhöht werden kann. Vom Injektionsdruck $p_1$ ist die Bauteilfüllzeit abhängig. Sie ist um so kürzer je höher der Injektionsdruck ist, wie aus der folgenden Formel hervorgeht:

$$\frac{V}{A} = - \frac{K}{\eta} \frac{\Delta p}{\Delta l}$$

V : Volumenstrom, A: durchströmte Fläche, K: Permeabilität, η: Viskosität, Δp: Druckunterschied und Δl: Abstand.

Die Permeabilität K der Faserlagen kann mittels Druckverlustmessung bestimmt werden.

Der Druckverlauf während einer Injektion ist in **Figur 2** in einem Diagramm dargestellt. Auf der Abszisse ist die Injektionszeit t und auf der Ordinate der Druck p aufgetragen. Der Umgebungsdruck $p_u$ ist konstant und durch eine durchgezogene Linie wiedergegeben, der aktuelle Injektionsdruck dagegen durch eine strichlinierte Kurve.

Auf die Form wird der Außendruck $p_u$ aufgebracht. Vom Zeitpunkt $t_0$, dem Beginn der Harzinjektion, bis zum Zeitpunkt $t_1$ steigt der Druck in der Form 2 bis auf den Injektionsdruck $p_{i1}$ an, der niedriger ist als der Außendruck $p_u$. Damit ist dann ein $dp_1$ des Innendrucks $p_{i1}$ gegenüber dem Außendruck $p_u$ erreicht. Die Druckdifferenz $dp_1$ ist so zu wählen, daß $p_{i1}$ den Umgebungsdruck $p_u$ nicht erreicht. Ein kleines $dp_1$ führt dabei bei einem gegebenen $p_u$ zu hohen Fließgeschwindigkeiten des injizierten Harzes und damit zu einer schnellen Füllung der Form. In Verbindung mit niedriger Viskosität η des Harzgemisches, die zu einer hohen Fließgeschwindigkeit beiträgt, kann damit ein hochreaktives Harzgemisch verwendet werden.

Zum Zeitpunkt $t_2$ ist das Bauteil völlig mit Harz durchtränkt. Der Injektionsdruck kann dann auf einen Wert $p_{i2}$ abgesenkt werden, der dem gewünschten Faservolumengehalt $V_F$ entspricht, wie sich aus den einleitenden Ausführungen ergibt. Mit dem dadurch abgesenkten Differenzdruck $dp_2$ härtet das injizierte Harz aus.

Bei konstant gehaltenem Druck $p_{i2}$ kann der gewünschte Faservolumengehalt auch durch Erhöhung des Außendruckes $p_u$ eingestellt werden.

Das Verfahren kann auch so durchgeführt werden, daß nach dem Füllen der Form der Injektionsdruck $p_i$ und gleichzeitig der Außendruck $p_u$ abgesenkt wird unter Aufrechterhaltung des $dp_2$, solange sich das Harzgemisch noch in der flüssigen Phase befindet.

Bei dem in Figur 1 dargestellten Ausführungsbeispiel der Form 2 und des Bauelementes 9 wird bei der Konfektionierung der Fasergelegegarnitur 12 ein Faserstreifen für den Faserverbund der Rippe 10 auf das ebene Fasergelege aufgesetzt und auf dem ebenen Fasergelegeteil durch Nadeln, Nähen oder dergleichen befestigt. Entsprechend können auch mehrere übereinander liegende Faserlagen konfektioniert werden, um die Fasergelegegarnitur 12 zu bilden.

Die Faserverstärkung im Rippenbereich wird in den entsprechend vorgeformten Abschnitt des elastisch verformbaren Formteiles 6 eingeführt. Hilfsweise können hier beispielsweise metallische Winkelleisten 17 mit den Faserstreifen in die Vertiefung eingesetzt werden, die als zusätzliche, die Form stabilisierende Formelemente wirken. Solche Winkelleisten 17 können lose eingefügt werden, sie können auch fest mit dem elastischen Formteil 6 so verbunden sein, daß sie den Bewegungen des Formteiles folgen können.

Falls auf einem im wesentlichen ebenen Bauelement 9 oder einem Bauelement mit großen Krümmungsradien Rücksprünge, beispielsweise bei einer Karosserietür Griffmulden vorzusehen sind, kann auf der Oberfläche des formbeständigen Formteiles 4 ein entsprechendes Negativ einer solchen Mulde aufgeheftet, beispielsweise aufgeklebt werden. Die entsprechende Wandstärke stellt sich durch die elastische Verformbarkeit des gegenüberliegenden Formteiles 6 automatisch auf die Dicke in den übrigen Bereichen ein.

Aufgrund der im wesentlichen isostatischen Belastung wird auch von dem elastisch verformbaren Formteil 6 eine glatte Oberfläche des Bauelementes 9 erzeugt.

Die Fasergelegegarnitur 12 des Bauelementes 9 kann vor dem Einlegen in die Form 2 konfektioniert und trocken in der Form abgelegt werden. Sie wird nach Schließen der Form durch den durch das Vakuum erzeugten Außendruck in ihrer Lage in der Form gehalten. Da vor Beginn der Injektion die Fasern mit dem vollen Außendruck $p_u$ Druck komprimiert werden, sind die Fasern in der Form festgelegt, und es kommt beim Injizieren des Harzgemisches auch bei hohen Injektionsgeschwindigkeiten und bei der während des Zeitraumes $t_0$ bis $t_1$ zunächst geringen Permeabilität der Faserlagen und somit hohen Durchflußwiderständen nicht zu einer Faserverschiebung in der Form 2. Durch Einstellen von $dp_1$ ist ein Optimum zwischen einer hohen Fließgeschwindigkeit und ausreichender Faserfixierung zu finden.

Bei Verwendung eines Autoklaven als Druckbehälter 18 kann das Harzgemisch in der Form 2 durch die Temperaturwirkung beschleunigt ausgehärtet werden. Es ist auch möglich, das Harzgemisch vorgewärmt zu injizieren und damit gleichzeitig dessen die Fließgeschwindigkeit mitbestimmende Viskosität und die für die Aushärtung benötigte Zeitdauer herabzusetzen.

Es ist selbstverständlich auch möglich, das erfindungsgemäße Verfahren für die Herstellung dreidimensionaler Bauelemente 9 einzusetzen, bei denen die Faser auf einem formgebenden, vorzugsweise geschlossenporigen Schaumstoffkern angeordnet ist.

Der formbeständige Formteil 4 kann wie gesagt aus einem Blech bestehen. Bei komplexeren Strukturen kann dieser Teil aber auch aus einem faserverstärkten Kunststoff gebildet werden, der beispielsweise auf einem Muster des Bauelementes - Werkstückes - abgeformt wird.

Bei großflächigen Bauelementen 9, insbesondere auch solchen mit großer Längserstreckung, kann das formstabile Formteil 4 auch aus einer Mehrzahl von Einzelelementen zusammengesetzt sein, die nebeneinander auf ein Stützgerüst befestigt werden. Die Verbindungen sind dabei im wesentlichen nur durch das Gewicht von Form 2 und Bauelement 9 belastet, deshalb genügen einfache Klebverbindungen. Stöße der formgebenden Formteile 4 können dabei in einfacher Weise durch Siegel- oder Klebebänder abgedichtet werden.

Das elastisch verformbare Formteil 6, das im allgemeinen die komplexen Strukturen des Bauelementes 9 abbildet, kann aus einem elastopolymeren Werkstoff bestehen, vorzugsweise einem Werkstoff, der durch das Harzgemisch nicht benetzbar ist, beispielsweise Silicongummi. Bereich komplexerer Struktur, beispielsweise Rippen und Stringer, insbesondere auch Kreuzungspunkte von Vorsprüngen, können dabei als gesonderte Formelemente hergestellt und dann mit ebenen Folien oder elastischen Platten aus entsprechenden Elastomeren, verbunden, beispielsweise an diese anvulkanisiert werden. Damit ist eine kostengünstige Herstellung des elastischen Formteiles 6 auch für die Fertigung komplex strukturierter Bauelemente möglich.

Wesentlich für das erfindungsgemäße Verfahren ist die Ausbildung der in Figur 1 dargestellten Leitungselemente 3, 5 und 7. Diese sind untereinander ähnlich ausgebildet. Ein solches Leitungselement - hier und im folgenden mit dem Bezugszeichen 20 versehen - ist in **Figur 3** im Querschnitt dargestellt. Das Leitungselement 20 besitzt eine breitflächige Auflagefläche 22. Oberhalb der Auflagefläche 22 ist ein sich in Längsrichtung des Leitungselements erstreckender Hohlraum 24 ausgebildet, der über einem schmalen Schlitz 26 mit der Auflagefläche 22 in Verbindung steht. Dieser Schlitz 26 hat vorzugsweise eine Breite b in der Größenordnung von 1 mm. Der Durchmesser D des Hohlraumes 24 kann in einer Größenordnung zwischen 8 und 10 mm liegen. Der Rücken des Leitungselementes 20 weist zwei Schultern 28 mit geringem Steigungswinkel $\alpha$ gegen die Auflagefläche 22 auf. Die beiden Schultern 28 gehen in einen gerundeten Abschnitt 30 über dem Hohlraum 24 über.

Das Leitungselement 20 besteht aus einem elastischen Material, vorzugsweise Silicongummi. Es kann sich daher unter dem Druck $p_u$ an die Oberfläche der Fasergelegegarnitur 12 anpassen und sich auch in Längsrichtung verdrehen. Es kann auch in Querrichtung gebogen werden. Um den Querschnitt des Hohlraumes 24 zu erhalten, ist in diesem zweckmäßig eine lose gegen die Wandung des Hohlraumes 24 anliegende Drahtwendel 31 als Stützelement vorgesehen, die durch einfaches Aufbiegen der Leitungselemente 20 in den Hohlraum 24 einführbar und auch aus dem Hohlraum herausnehmbar ist.

Das Leitungselement 20 hat eine große Längsstreckung und wenigstens zwei Leitungselemente werden in die Form 2 so eingelegt, daß sie sich in die gleiche Richtung erstrecken und voneinander möglichst gleichmäßige bzw. sich über die Länge nicht sehr wesentlich ändernde Abstände haben. Sie sollen sich soweit möglich in Richtung der größten Längserstreckung der Form erstrecken.

In **Figur 4** ist eine solche Anordnung schematisch dargestellt. Auf dem formbeständigen Formteil 4, dessen größte Längserstreckung senkrecht zur Zeichnungsebene angenommen sei, liegt die Fasergelegegarnitur 12 auf, das hier als ebenes Fasergelege dargestellt ist. An den Rändern der Fasergelegegarnitur 12, und zwar vorzugsweise an den Rändern mit der größten Längserstreckung, ist auf diese Fasergelegegarnitur 12 jeweils ein Leitungselement 20 aufgesetzt, das mit seiner Auflagefläche 22 auf der Oberseite der Fasergelegegarnitur 12 aufliegt. Die Fasergelegegarnitur 12 und die Leitungselemente 20 sind mit dem elastischen Formteil 6 abgedeckt. Die Leitungselemente 20 sind vorzugsweise an einem Ende zwischen dem formbeständigen Formteil 4 und dem elastischen Formteil 6 hindurch gegen diese abgedichtet nach außen geführt.

Bei der Form nach Figur 4 ist das rechte Leitungselement 20 mit einer das Vakuum erzeugenden Drucksenke (Vakuumleitung 14) verbunden, während das linke Leitungselement an die Injektionsleitung 16 angeschlossen ist.

Nach Herstellung des technischen Vakuums in der Form 2 wird das Harz unter einem Druck $p_1$ injiziert, der um $dp_1$ niedriger ist als der Außendruck $p_u$. Das Harz strömt dann durch die Fasergelegegarnitur 12 entsprechend eingezeichneten Pfeilen und füllt dabei aufgrund des technischen Vakuums, das in der Form herrscht, die gesamte Form 2, ohne daß es zu Lufteinschlüssen kommt. Aufgrund des Vakuums im Forminneren werden auch Fasereinlagen, die für die Bildung der in Figur 1 dargestellten rippenartigen Vorsprünge (Rippen 10) vorgesehen sind, problemlos durchtränkt, ebenso die Bereiche der Fasergelegegarnitur 12, die zwischen dem Schlitz 26 der Leitungselemente 20 und dem dazu in Abstand liegenden Rand der Fasergelegegarnitur 12 liegen.

Die Zahl der zueinander parallelen oder sich in gleiche Richtung erstreckenden Leitungselemente wird 20 entsprechend den jeweiligen Anforderungen festgelegt. So könnte beispielsweise bei einem breiteren Bauelement 9 rechts von dem an das Vakuum angeschlossenen Leitungselement in gleichem Abstand wie das linke Leitungselement ein weiteres an die Injektionsleitung 16 angeschlossenes Leitungselement vorgesehen werden. Wesentlich ist, daß sich jeweils die Injektionsleitungen 16 mit Vakuumleitungen 14 abwechseln, um eine Querströmung zwischen den Leitungselementen sicherzustellen. Der Abstand der Vakuumleitungen 14 von den Injektionsleitungen 16 bestimmt u.a. die Füllzeit der Form 2.

In **Figur 5** ist in Draufsicht eine Tragflügelstruktur 32 dargestellt mit sich in Flügellängsrichtung erstreckenden Stringern 34 und quer dazu liegenden Rippenträgern 36. Eine solche Tragflügelstruktur kann eine große Länge haben, wobei Längen bis 50 m denkbar sind. Die Größe solcher Tragflügelstrukturen ist im wesentlichen nur durch die Größe der verfügbaren Autoklaven begrenzt.

Auch für Längserstreckungen der Bauelemente in der genannten Größe sind Leitungselemente 20, wie sie oben unter Bezug auf Figur 3 beschrieben sind, also mit Hohlraumdurchmessem von 8 bis 10 mm, ausreichend, da der Strömungswiderstand in dem Hohlraum 24 wesentlich geringer ist, als der Strömungswiderstand der Fasergelegegarnitur 12 und damit quer zu benachbarten Fasergelegen. Es ist daher möglich, auch bei großen Längen eine gleichmäßige Injektion des Harzes über die gesamte Länge des Bauelementes 9 sicherzustellen.

Bei Tragflügelelementen, wie sie in Figur 5 dargestellt sind, sind die Stringer 34 in im wesentlichen gleichmäßigen bzw. sich nur geringfügig ändernden Abständen vorgesehen, wenn die Stringer bei sich stetig zur Flügelspitze hin verringernder Tiefe des Flügelprofils über die Flügelelementerstreckung wie in Figur 5 dargestellt konvergieren. Zwischen den Stringem 34 sind abwechselnd Injektionsleitungen 16 und Vakuumleitungen 14 angeordnet, die beispielsweise an der Flügelwurzel 39 aus der Form herausgeführt sind. Bei sehr langen Bauelementen können beide Enden hier also auch an der Flügelspitze der Leitungselemente aus der Form herausgeführt und an eine Harzquelle bzw. Drucksenke angeschlossen sein.

In **Figur 6** ist ein Schnitt durch eine Form zur Herstellung der Flügelstruktur nach Figur 5 - Schnitt VI - VI in Fig. 5 - wiedergegeben. Auf dem die äußere Oberfläche und Form des Tragflügelelementes bestimmenden formstabilen Formteil 4 liegt die Torsionsschale bildende Faserlage 40 auf, auf dieser Faserlage 40 liegen Bündel 38 aus sich in Längsrichtung des Flügels erstreckenden unidirektionalen Fasern auf, die als unidirektionale Steifigkeiten über eine auf der der Faserlage 40 gegenüberliegenden Oberfläche der Bündel 38 aufliegende Faserlagenabdeckung 42 in die Struktur des Tragflügelelementes schubsteif eingebunden sind.

Das elastische Formteil 6 ist hier aus vorgeformten Formelementen 44 zusammengesetzt, die so geformt sind, daß sie die innere Oberfläche der Flügelschale und die Flächen der Stringer 34 und der Rippenträger 36 abbilden. In der Zeichnung ist diese Abbildung beginnend mit der Stimseite der abgewinkelten Schenkel 35 eines Stringers 34 bis über die Oberfläche des Schenkels 35 zur Stirnseite dieses Schenkels 35 beim benachbarten Stringer 34 dargestellt.

Etwa in der Mitte sind die Formelemente 44 in der den Faserlagen zugewandten Fläche mit Vertiefungen 46 versehen, die sich in Längsrichtung erstrecken und mit denen die Leitungselemente 20 übergriffen werden, deren Querschnitt sie entsprechen. Die Formelemente 44 sind jeweils an ihren Rändern 48 vakuumdicht miteinander zu verbinden. Zur Erzielung einer sicheren Abdichtung können sich die Formelemente 44 an diesen Rändern überlappen und nach Art von Nut und Feder 49 miteinander verknüpft werden, wie beim mittleren Stringer beispielsweise veranschaulicht. Diese Verbindung ist zweckmäßig lösbar ausgebildet, damit zum Entformen die einzelnen Formelemente nacheinander herausgenommen werden können. Nach Entnahme der Formelemente 44 wird dann das Leitungselement herausgenommen. Dieses kann dabei von der Oberfläche des Bauelementes 9 durch Abbiegen abgezogen werden, wobei das ausgehärtete Harz im Bereich der Mündung des Schlitzes 26 in der Auflagefläche 22 abbricht.

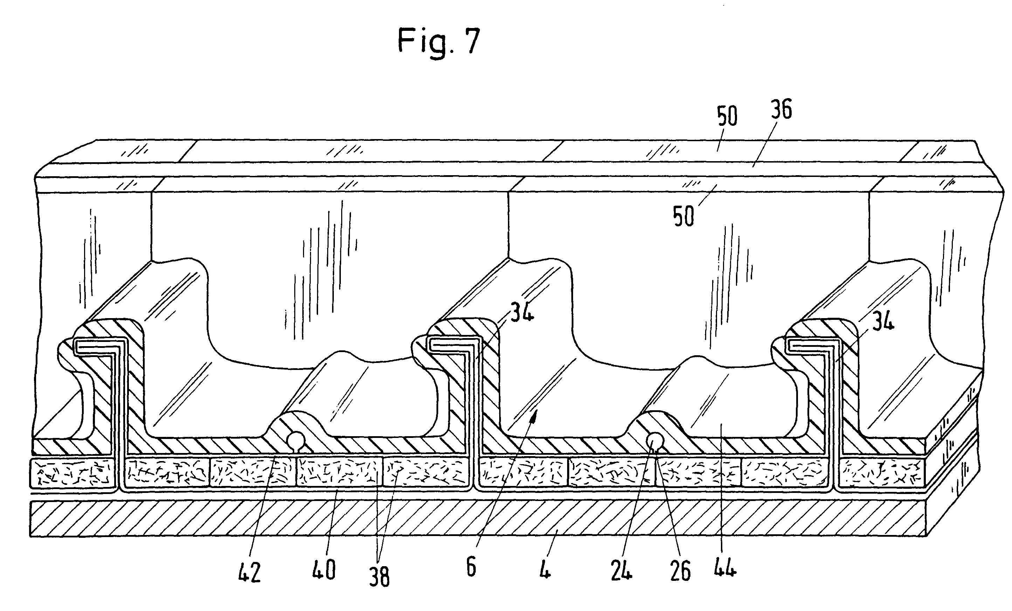

In Figur 6 sind mit ihren Umrißlinien Querwände 50 an den einzelnen Formelementen angedeutet. Mit diesen Querwänden 50 werden die Rippenträger 36 abgebildet, wie in **Figur 7** schematisch dargestellt. Die Abbildung der Rippenträger erfolgt jeweils zwischen zwei an benachbarte Formelemente angeformte Querwände 50, die mit den beschriebenen Formelementen 44 aus einem Stück bestehen können. Diese Wandungen sind an ihrer, den Fasergelegen 38, 40, 42 zugewandten Oberfläche ebenfalls mit einer der Kontur der Leitungselemente versehenen Ausnehmung versehen, so daß die Leitungselemente durch diese Querwände hindurch geführt werden können. Auf diese Weise werden nach dem Herausnehmen der Leitungselemente Verbindungen durch die Rippenträger hindurch erzeugt, wie sie beispielsweise im Tankbereich "nasser" Tragflügel erforderlich sind. Zusätzlich können am Fuß der Stringer 34 Durchlässe 52 vorgesehen werden. Die in Figur 6 dargestellten Leitungselemente sind jeweils abwechselnd an die das Vakuum erzeugende Drucksenke (Vakuumleitung 14) und die Injektionsleitung 16 für das Harz anzuschließen. Der Harzfluß erfolgt damit quer zu den Stringern, wobei auch bei Faserlagen größerer Dikke, wie sie bei Anordnung der unidirektionalen Steifigkeiten (Bündel 38) vorliegen, eine vollständige Durchtränkung einschließlich der Stringer 34 und der Querwände 50 sichergestellt ist.

Bei einer Vielzahl von Formelementen der vorstehend beschriebenen Art, bei der im elastischen Formteil 6 sehr große Abdichtungslängen vorliegen, besteht das Risiko, daß vereinzelt Undichtigkeiten auftreten können, durch die Außenluft angesaugt werden kann, die das Bauelement 9 zu Ausschuß machen kann. Dem kann vorgebeugt werden durch eine elastische Abdeckung des elastischen Formteils 6 und Evakuierung des Zwischenraums zwischen der Oberfläche des elastischen Formteiles 6 und der zusätzlich vorgesehenen elastischen Abdeckung. Zur Luftführung werden im Zwischenraum luftführende Materialien vorgesehen, beispielsweise Fasergewebe- oder -gelegeschichten oder Dochte aus Fasermaterial.

**Bezugszeichenliste**

| | |
|---|---|
| 02 | Form |
| 03 | Leitungselement |
| 04 | Formteil |
| 05 | Leitungselement |
| 06 | Formteil (elastisch) |
| 07 | Leitungselement |
| 08 | Auflagen |
| 09 | Bauelement |
| 10 | Rippen |
| 12 | Fasergelegegarnitur |
| 14 | Vakuumleitung |
| 16 | Injektionsleitung |
| 17 | Winkelleisten |
| 18 | Druckbehälter |
| 19 | Druckraum |
| 20 | Leitungselement |
| 22 | Auflagefläche |
| 24 | Hohlraum |
| 26 | Schlitz |
| 28 | Schultern |
| 30 | Abschnitt (gerundeter) |
| 31 | Drahtwendel |
| 32 | Tragflügelstruktur |
| 34 | Stringer |
| 36 | Rippenträger |
| 38 | Bündel |
| 39 | Flügelwurzel |
| 40 | Faserlage |
| 42 | Faserlagenabdeckung |
| 44 | Formelemente |
| 46 | Vertiefung |
| 48 | Ränder |
| 49 | Nut und Feder |
| 50 | Querwände |
| 52 | Durchlässe |

**Patentansprüche**

1. Vorrichtung zur Herstellung von großflächigen Bauelementen (9) aus Faserverbundwerkstoffen durch Injektion eines Harzgemisches in eine Form (2) mit zusammenwirkenden Formteilen, zwischen die vorgeformte Fasergelegegarnituren (12) eingelegt sind, von denen das eine Formteil (6) elastisch verformbar und das andere Formteil (4) formbeständig ausgebildet ist und die beiden Formteile (4, 6) an ihren Rändern vakuumdicht verbindbar sind, die Form (2) mit Anschlüssen für Mittel zur Injektion des Harzgemisches und eine Drucksenke zum Absenken des Innendruckes des Formraumes unter den Atmosphärendruck versehen ist, bei dem auf die geschlossene Form (2) in einem Druckbehälter (18) allseitig ein über dem Atmosphärendruck liegender

Außendruck ($p_u$) aufgebracht wird, und in die Form (2) das Harzgemisch mit einem Druck injiziert und bis zum Aushärten auf einem Druck gehalten wird, der um eine den Faservolumengehalt ($V_F$) des Bauelementes (9) bestimmende Differenz niedriger ist als der auf die Form (2) wirkende Außendruck ($p_u$), **dadurch gekennzeichnet,**
**daß** für die Injektion des Harzgemisches und den Anschluß an die Drucksenke auf der dem formbeständigen Formteil (4) gegenüberliegenden Oberfläche der Fasergelegegarnitur (12) aufliegende Leitungselemente (3, 5, 7, 14, 16, 20) vorgesehen sind, die eine Längserstreckung in der Größenordnung der Länge oder der Breite der großflächigen Bauelemente und eine breitflächige Auflagefläche (22) haben, oberhalb der Auflagefläche (22) mit einem sich in Längsrichtung der Leitungselemente erstreckenden Hohlraum (24) versehen sind und in der Auflagefläche (22) mit einem sich im wesentlichen über die gesamte Länge des Leitungselementes erstreckenden schmalen Schlitz (26) versehen sind, der über seine Länge mit dem Hohlraum (24) verbunden ist und dessen Breite (b) schmaler ist als der Durchmesser des Hohlraumes (24).

2. Vorrichtung nach Anspruch 1,
   **dadurch gekennzeichnet,**
   **daß** im Hohlraum (24) der Leitungselemente lose eine gegen die Wandung des Hohlraumes (24) anliegende Drahtwendel (31) als Stützelement angeordnet ist.

3. Vorrichtung nach Anspruch 1 oder 2,
   **dadurch gekennzeichnet,**
   **daß** die Leitungselemente mit wenigstens einem Ende zwischen den Rändern des elastisch verformbaren Formelementes (6) und des formstabilen Formteiles (4) hindurchgeführt und mit der Harzzuleitung bzw. der Drucksenke verbunden sind.

4. Vorrichtung nach einem der vorhergehenden Ansprüche,
   **dadurch gekennzeichnet,**
   **daß** im Abstand voneinander eine Mehrzahl von Leitungselementen angeordnet ist, die abwechselnd an die Drucksenke und die Mittel zur Injektion des Harzgemisches angeschlossen sind.

5. Vorrichtung nach einem der vorhergehenden Ansprüche,
   **dadurch gekennzeichnet,**
   **daß** bei einer Form (2) für die Herstellung von langen Bauelementen (9) mit auf einer Oberfläche angeordneten und sich in Längsrichtung des Bauteiles erstreckenden rippenartigen Vorsprüngen (Rippen 10) die Leitungselemente im wesentlichen parallel zu den Rippen (10) angeordnet sind.

6. Vorrichtung nach Anspruch 5,
   **dadurch gekennzeichnet,**

   **daß** in dem elastisch verformbaren Formteil (4) die Rippen (10) des Bauelementes (9) als abbildende Formvertiefungen ausgebildet sind und
   **daß** die Fasergelegegarnituren (12) mit Verstärkungsstreifen für die Rippen (10) versehen ist, die in die Formvertiefungen eingreifen und mit der Fasergelegegarnitur (12) verbunden sind.

7. Vorrichtung nach Anspruch 6,
   **dadurch gekennzeichnet,**
   **daß** das elastisch verformbare Formteil (6) mit in die Formvertiefungen eingreifenden Winkelleisten (17) versehen ist, deren Formbeständigkeit größer ist als die des elastisch verformbaren Formteils (6).

8. Vorrichtung nach Anspruch 6 oder 7,
   **dadurch gekennzeichnet,**

   **daß** quer zu den sich längs erstreckenden Rippen (10) weitere diese kreuzende rippenartige Vorsprünge vorgesehen sind und
   **daß** die Leitungselemente am Fuß dieser weiteren Vorsprünge durch diese hindurchgeführt sind.

9. Vorrichtung nach einem der vorhergehenden Ansprüche,
   **dadurch gekennzeichnet,**
   **daß** die Leitungselemente unter dem elastisch verformbaren Formteil (6) angeordnet sind.

10. Vorrichtung nach einem der vorhergehenden Ansprüche,
    **dadurch gekennzeichnet,**
    **daß** in der an die Leitungselemente angeschlossenen Verbindungsleitung zur Drucksenke Schwimmerventile vorgesehen sind, die zur Drucksenke hin schließen.

11. Vorrichtung nach einem der vorstehenden Ansprüche,
    **dadurch gekennzeichnet,**
    **daß** als Druckbehälter (18) ein beheizbarer Autoklav verwendet wird.

12. Verfahren zur Herstellung von großflächigen Bauelementen (9) aus Faserverbundwerkstoffen durch Injektion eines Harzgemisches in eine Form (2) mit zusammenwirkenden Formteilen, zwischen die vorgeformte Fasergelegegarnituren (12) eingelegt sind, von denen das eine Formteil (6) elastisch verformbar und das andere Formteil (4) formbeständig ausgebildet ist und die beiden Formteile (4, 6) an ihren Rändern vakuumdicht verbindbar sind, die Form (2) mit Anschlüssen für Mittel zur Injektion des Harzgemisches und eine Drucksenke zum Absenken des Innendruckes des Formraumes unter den Atmosphärendruck versehen ist, bei dem auf die geschlossene Form (2) in einem Druckbehälter (18) allseitig ein über dem Atmosphärendruck liegender Außendruck ($p_u$) aufgebracht wird, und in die Form (2) das Harzgemisch mit einem Druck injiziert und bis zum Aushärten auf einem Druck gehalten wird, der um eine den Faservolumengehalt ($V_F$) des Bauelementes (9) bestimmende Differenz niedriger ist als der auf die Form (2) wirkende Außendruck ($p_u$), **dadurch gekennzeichnet,** **daß** das Harzgemisch auf der dem formbeständigen Formteil (4) gegenüberliegenden Oberfläche der Fasergelegegarnitur (12) mittels eines Linienangusses aus einem längserstreckten Schlitz (26) in einem Leitungselement mit einer Länge in der Größenordnung der Länge oder der Breite der großflächigen Bauelemente injiziert wird und durch einen längserstreckten Schlitz (26) in einem anderen Leitungselement ein Anschluß an die Drucksenke gegeben ist, wobei die Schlitze (26) eine Breite (b) aufweisen, die schmaler ist als der Durchmesser eines Hohlraumes (24) in dem Leitungselement.

13. Verfahren nach Anspruch 12,
**dadurch gekennzeichnet,**
**daß** der Innendruck ($p_i$) der Form (2) auf einen Druck kleiner als 50 hPa abgesenkt und während der Injektion des Harzgemisches gehalten wird.

14. Verfahren nach Anspruch 13,
**dadurch gekennzeichnet,**
**daß** der Innendruck ($p_i$) auf einen Druck kleiner als 1 hPa abgesenkt wird.

15. Verfahren nach einem der Ansprüche 12 bis 14,
**dadurch gekennzeichnet,**

    **daß** der Injektionsdruck während eines ersten Zeitabschnittes größer als der den Faservolumengehalt des Bauelementes (9) bestimmende Innendruck ($p_i$) gewählt wird, und
    **daß** nach vollständiger Tränkung der Fasergelegegarnitur (12) mit dem injizierten Harzgemisch durch Einstellung des Außendruckes ($p_u$) und/oder des Innendruckes ($p_i$) der den Faservolumengehalt ($V_F$) bestimmende Innendruck eingestellt und bis zum Aushärten des Harzgemisches gehalten wird.

16. Verfahren nach einem der Ansprüche 12 bis 15,
**dadurch gekennzeichnet,**
**daß** der Außendruck etwa 0,6 MPa beträgt.

17. Verfahren nach einem der Ansprüche 12 bis 16,

**dadurch gekennzeichnet,**
**daß** auf das elastische Formteil (6) eine luftführende Schicht aufgebracht, diese luftdicht abgedeckt und der die luftführende Schicht enthaltende Zwischenraum evakuiert wird.

## Claims

1. Apparatus for making large-area components (9) from fibre composites by injecting a resin mixture into a mould (2) with interacting mould elements between which the preformed fibre layer arrangements (12) are inserted, one element (6) being resiliently deformable and the other (4) dimensionally stable, the two elements (4, 6) being joinable in vacuum-tight manner at their edges, wherein the mould (2) is provided with connections for means for injecting the resin mixture and a negative pressure source for lowering the internal pressure of the mould chamber below atmospheric, and wherein an external pressure ($p_u$) above atmospheric is applied to the closed mould (2) in a pressure vessel (18) from all sides, and the resin mixture is injected into the mould (2) at a pressure and until cured is kept at a pressure which is lower than the external pressure ($p_u$) acting on the mould (2) by a difference determining the volumetric fibre content ($V_F$) of the component,
**characterised in that** pipe elements (3, 5, 7, 14, 16, 20), lying on the surface of the fibre layer arrangement (12) opposite the dimensionally stable mould member (4), are provided for injection of the resin mixture and connection to the negative pressure source, the pipe elements having a length of the same order as the length or width of the large-area components and having a wide-area bearing surface (22), being provided with a cavity (24) extending longitudinally of them above the bearing surface (22) and being provided with a narrow slot (26) in the bearing surface, which slot extends substantially over the whole length of the pipe element and is connected to the cavity (24) along its length, the width (b) of the slot being narrower than the diameter of the cavity (24).

2. Apparatus according to claim 1,
**characterised in that**
a wire helix (31) is provided as a supporting element in the cavity (24) in the pipe elements, lying loosely against the wall of the cavity (24).

3. Apparatus according to claim 1 or 2,
**characterised in that**
at least one end of the pipe elements is taken through between the edges of the resiliently deformable mould element (6) and of the dimensionally stable mould member (4) and connected to the resin feed or the negative pressure source.

4. Apparatus according to any of the preceding claims, **characterised in that** a plurality of pipe elements are spaced apart and connected alternately to the negative pressure source and the means for injecting the resin mixture.

5. Apparatus according to any of the preceding claims, **characterised in that** in a mould (2) for making long components (9), with rib-like projections (ribs 10) arranged on a surface and extending longitudinally of the component, the pipe elements are arranged substantially parallel with the ribs (10).

6. Apparatus according to claim 5, **characterised in that**

in the resiliently deformable mould member (4) the ribs (10) of the component (9) are in the form of modelling depressions in the mould, and that the fibre layer arrangements (12) are provided with reinforcing strips for the ribs (10), which engage in the depressions and are joined to the arrangement (12).

7. Apparatus according to claim 6, **characterised in that** the resiliently deformable mould member (6) is provided with angular straps (17) engaging in the depressions in the mould, their dimensional stability being greater than that of the resiliently deformable member (6).

8. Apparatus according to claim 6 or 7, **characterised in that**

transversely to the longitudinally extending ribs (10) further protrusions are provided, crossing the ribs, and that the pipe elements are passed through these further protrusions, at the bottom thereof.

9. Apparatus according to any of the preceding claims, **characterised in that** the pipe elements are arranged under the resiliently deformable mould member (6).

10. Apparatus according to any of the preceding claims, **characterised in that** float valves are provided in the connecting pipe to the negative pressure source, joined to the pipe elements, the valves closing towards the negative pressure source.

11. Apparatus according to any of the preceding claims,

**characterised in that** a heatable autoclave is used as the pressure vessel (18).

12. A method of making large-area components (9) from fibre composites by injecting a resin mixture into a mould (2) with interacting mould elements between which the preformed fibre layer arrangements (12) are inserted, one element (6) being resiliently deformable and the other (4) dimensionally stable, the two elements (4, 6) being joinable in vacuum-tight manner at their edges, wherein the mould (2) is provided with connections for means for injecting the resin mixture and a negative pressure source for lowering the internal pressure of the mould chamber below atmospheric, and wherein an external pressure ($p_u$) above atmospheric is applied to the closed mould (2) in a pressure vessel (18) from all sides, and the resin mixture is injected into the mould (2) at a pressure and until cured is kept at a pressure which is lower than the external pressure ($p_u$) acting on the mould (2) by a difference determining the volumetric fibre content ($V_F$) of the component, **characterised in that** the resin mixture on the surface of the fibre layer arrangement (12) opposite the dimensionally stable mould member (4) is injected by means of a linear gate from an elongated slot (26) in a pipe element, the length of which is of the same order as the length or width of the large-area components, and a connection to the negative pressure source is provided by an elongated slot (26) in another pipe element, the width (b) of the slot (26) being narrower than the diameter of a cavity (24) in the pipe element.

13. A method according to claim 12, **characterised in that** the internal pressure ($p_i$) of the mould (2) is lowered to a pressure below 50 hPa and maintained during injection of the resin mixture.

14. A method according to claim 13, **characterised in that** the internal pressure ($p_i$) is lowered to a pressure below 1 hPa.

15. A method according to any of claims 12 to 14, **characterised in that**

the injection pressure during a first period is chosen higher than the internal pressure ($p_i$) determining the volumetric fibre content of the component (9), and that when the fibre layer arrangement (12) has been completely impregnated with the injected resin mixture, the internal pressure ($p_i$) determining the volumetric fibre content ($V_F$) is adjusted by adjusting the external pressure ($p_u$) and/or the internal pressure and is maintained until the resin mixture has cured.

16. A method according to any of claims 12 to 15, **characterised in that** the external pressure is approximately 0.6 MPa.

17. A method according to any of claims 12 to 16, **characterised in that** an air-conducting layer is placed on the resilient mould member (6) and covered in air-tight manner, and the gap containing the air-conducting layer is evacuated.

## Revendications

1. Dispositif de fabrication d'éléments de construction (9) à grande surface, réalisés dans des matériaux renforcés par fibres par injection d'un mélange de résine dans un moule (2) formé par des parties de moule agissant conjointement, entre lesquelles sont insérées les garnitures en fibres (12) et parmi lesquelles l'une des parties de moule (6) est élastiquement déformable et l'autre partie de moule (4) présente une forme stable, les deux parties de moule (4, 6) peuvent être assemblées par leurs bords de manière étanche au vide, le moule (2) est muni de raccords destinés à des organes d'injection du mélange de résine et d'un système de dépressurisation destiné à abaisser la pression à l'intérieur du moule en dessous de la pression atmosphérique, dans lequel dispositif une pression extérieure ($p_u$) supérieure à la pression atmosphérique est appliquée de tous les côtés sur le moule (2) fermé, monté dans une cuve sous pression (18), et le mélange de résine est injecté dans le moule (2) sous l'effet d'une pression et est maintenu jusqu'au durcissement sous l'effet d'une pression, qui est inférieure à la pression extérieure ($p_u$) exercée sur le moule (2) d'une valeur déterminant la teneur volumétrique des fibres ($V_F$) de l'élément de construction (9), **caractérisé en ce que**, pour l'injection du mélange de résine et pour le raccordement au système de dépressurisation, il est prévu des éléments de conduite (3, 5, 7, 14, 16, 20) posés sur la surface de la garniture en fibres (12) opposée à la partie de moule (4) non déformable, lesquels éléments de conduite présentent une longueur égale à la longueur ou à la largeur des éléments de construction à grande surface et une large surface d'appui (22), sont munis au-dessus de la surface d'appui (22) d'une cavité (24) qui s'étend dans le sens longitudinal des éléments de conduite et sont munis d'une fente (26) étroite réalisée dans la surface d'appui (22) et orientée sensiblement sur toute la longueur de l'élément de conduite, laquelle fente communique sur toute sa longueur avec la cavité (24) et sa largeur (b) est inférieure au diamètre de la cavité (24).

2. Dispositif selon la revendication 1, **caractérisé en ce que**, dans la cavité (24) des éléments de conduite, il est prévu une spirale en fil (31), conçue comme élément de support et disposée sans attache contre la paroi de la cavité (24).

3. Dispositif selon la revendication 1 ou 2, **caractérisé en ce que** les éléments de conduite sont guidés avec au moins une extrémité entre les bords de la partie de moule (6) déformable et de la partie de moule (4) non déformable et sont reliés à la conduite d'admission de la résine et au système de dépressurisation.

4. Dispositif selon l'une quelconque des revendications précédentes, **caractérisé en ce qu'**une pluralité d'éléments de conduite sont disposés à une distance donnée les uns des autres, lesquels sont raccordés en alternance au système de dépressurisation et aux organes destinés à l'injection du mélange de résine.

5. Dispositif selon l'une quelconque des revendications précédentes, **caractérisé en ce que**, dans un moule (2) destiné à la fabrication d'éléments de construction (9) longs, comportant des saillies en forme de nervures (nervures 10) disposées sur une face et s'étendant dans le sens longitudinal de l'élément de construction, les éléments de conduite sont disposés sensiblement parallèlement aux nervures (10).

6. Dispositif selon la revendication 5, **caractérisé en ce que** la partie de moule (4) élastiquement déformable comporte des gorges reproduisant la forme des nervures (10) de l'élément de construction (9) et **en ce que** les garnitures en fibres (12) sont munies de bandes de renforcement pour les nervures (10), lesquelles bandes s'engagent dans les gorges du moule et sont assemblées avec la garniture en fibres (12).

7. Dispositif selon la revendication 6, **caractérisé en ce que** la partie de moule (6) élastiquement déformable est munie de cornières (17) qui s'engagent dans les gorges du moule et dont la stabilité dimensionnelle est supérieure à celle de la partie de moule (6) élastiquement déformable.

8. Dispositif selon la revendication 6 ou 7, **caractérisé en ce qu'**il est prévu des saillies supplémentaires en forme de nervures qui entrecoupent les nervures (10) orientées dans le sens longitudinal et **en ce que** les éléments de conduite au pied de ces saillies supplémentaires sont guidés à travers celles-ci.

**9.** Dispositif selon l'une quelconque des revendications précédentes, **caractérisé en ce que** les éléments de conduite sont disposés en dessous de la partie de moule (6) élastiquement déformable.

**10.** Dispositif selon l'une quelconque des revendications précédentes, **caractérisé en ce que**, dans la conduite de raccordement avec le système de dépressurisation, qui est raccordée aux éléments de conduite, il est prévu des robinets flotteurs qui obturent la liaison avec le système de dépressurisation.

**11.** Dispositif selon l'une quelconque des revendications précédentes, **caractérisé en ce que** la cuve sous pression (18) utilisée est un autoclave susceptible d'être chauffé.

**12.** Procédé de fabrication d'éléments de construction (9) à grande surface, réalisés dans des matériaux renforcés par fibres par injection d'un mélange de résine dans un moule (2) formé par des parties de moule agissant conjointement, entre lesquelles sont insérées les garnitures en fibres (12) et parmi lesquelles l'une des parties de moule (6) est élastiquement déformable et l'autre partie de moule (4) présente une forme stable, les deux parties de moule (4, 6) peuvent être assemblées par leurs bords de manière étanche au vide, le moule (2) est muni de raccords destinés à des organes d'injection du mélange de résine et d'un système de dépressurisation destiné à abaisser la pression à l'intérieur du moule en dessous de la pression atmosphérique, dans lequel procédé une pression extérieure ($p_u$) supérieure à la pression atmosphérique est appliquée de tous les côtés sur le moule (2) fermé, monté dans une cuve sous pression (18), et le mélange de résine est injecté dans le moule (2) sous l'effet d'une pression et est maintenu jusqu'au durcissement sous l'effet d'une pression, qui est inférieure à la pression extérieure ($p_u$) exercée sur le moule (2) d'une valeur déterminant la teneur volumétrique des fibres ($V_F$) de l'élément de construction (9), **caractérisé en ce que** le mélange de résine est injecté sur la face de la garniture en fibres (12) opposée à la partie de moule (4) non déformable, au moyen d'une buse d'injection linéaire, hors d'une fente (26) longitudinale réalisée dans un élément de conduite présentant une longueur égale à la longueur ou à la largeur des éléments de construction à grande surface, et une fente longitudinale (26) réalisée dans un autre élément de conduite forme un raccord avec le système de dépressurisation, les fentes (26) ayant une largeur (b) inférieure au diamètre d'une cavité (24) réalisée dans l'élément de conduite.

**13.** Procédé selon la revendication 12, **caractérisé en ce que** la pression intérieure ($p_i$) du moule (2) est abaissée à une pression inférieure à 50 hPa et est maintenue à cette valeur pendant l'injection du mélange de résine.

**14.** Procédé selon la revendication 13, **caractérisé en ce que** la pression intérieure ($p_i$) est abaissée à une pression inférieure à 1 hPa.

**15.** Procédé selon l'une quelconque des revendications 12 à 14, **caractérisé en ce que** la pression d'injection pendant un premier intervalle de temps est supérieure à la pression intérieure ($p_i$) déterminant la teneur volumétrique des fibres de l'élément de construction (9), et **en ce que**, après imprégnation complète de la garniture en fibres (12) avec le mélange de résine injecté, la pression intérieure déterminant la teneur volumétrique des fibres ($V_F$) est définie par le réglage de la pression extérieure ($p_u$) et/ou de la pression intérieure ($p_i$) et est maintenue jusqu'au durcissement du mélange de résine.

**16.** Procédé selon l'une quelconque des revendications 12 à 15, **caractérisé en ce que** la pression extérieure est de l'ordre de 0,6 MPa environ.

**17.** Procédé selon l'une quelconque des revendications 12 à 16, **caractérisé en ce qu'**une couche de guidage de l'air est déposée sur la partie de moule (6) élastique, ladite couche est revêtue de manière étanche à l'air et le vide est généré dans l'espace contenant la couche de guidage de l'air.

EP 0 853 548 B1

Fig.1

Fig. 2

13

EP 0 853 548 B1

# Fig. 3

# Fig. 4

14

EP 0 853 548 B1

Fig.5

Fig. 6

15

EP 0 853 548 B1

Fig. 7

16